## Europäisches Patentamt

## European Patent Office

## Office européen des brevets

(19)

(11) Veröffentlichungsnummer: **0 306 530**
**A1**

(12)

# EUROPÄISCHE PATENTANMELDUNG

veröffentlicht nach Art. 158 Abs. 3 EPÜ

(21) Anmeldenummer: **87902871.0**

(22) Anmeldetag: **26.02.87**

Daten der zugrundeliegenden internationalen Anmeldung:

(86) Internationale Anmeldenummer: **PCT/SU 87/00027**

(87) Internationale Veröffentlichungsnummer: **WO 88/06816 (07.09.88 88/20)**

(51) Int. Cl.⁴: **H 02 N 2/00, H 01 L 41/08**

(43) Veröffentlichungstag der Anmeldung: **15.03.89**
**Patentblatt 89/11**

(84) Benannte Vertragsstaaten: **CH DE FR GB IT LI NL SE**

(71) Anmelder: **KIEVSKY POLITEKHNICHESKY INSTITUT IMENI 50-LETIA VELIKOI OKTYABRSKOI SOTSIALISTICHESKOI REVOLJUTSII, pr. Pobedy, 37, Kiev, 252056 (SU)**

(72) Erfinder: **VISHNEVSKY, Vladimir Sergeevich, pr. Korneichuka, 18b-104, Kiev, 252205 (SU)**
Erfinder: **LAVRINENKO, Vyacheslav Vasilievich, ul. A.Malyshko, 13-125, Kiev, 252206 (SU)**

(74) Vertreter: **Nix, Frank Arnold, Dr., Kröckelbergstrasse 15, D-6200 Wiesbaden (DE)**

(54) **PIEZOELEKTRISCHER MOTOR.**

(57)    Der piezoelektrische Motor hat einen Stator (1) und einen Rotor (3). Zum Stator (1) gehört eine Grundplatte (7) und ein auf der Grundplatte (7) angeordneter piezoelektrischer Radialschwingungsoszillator (6), der ein Piezoelement (9) mit Elektroden (13) und wenigstens zwei Stößel (10) enthält. Jeder Stößel (10) ist mit einem Ende wenigstens auf einer ebenen Fläche des Piezolements (9) so befestigt, daß zwischen dem Piezoelement (9) und dem Stößel (10) ein Spielraum (14) gebildet wird. Das andere Ende jedes Stößels (10) stemmt sich gegen den Rotor (3).

EP 0 306 530 A1

PIEZOELEKTRISCHER MOTOR    00306530

## Gebiet der Technik

Die Erfindung betrifft piezoelektrische Geräte, insbesondere piezoelektrische Motoren.

## Stand der Technik

Es ist ein piezoelektrischer Motor(GB-PS    2118374 B bekanntgemacht am 28.Januar 1986, Kl. H02 N  11/00) bekannt, der einen Stator und einen Rotor enthält, der durch Friktion mit dem Stator zusammenwirkt und dieser eine Grundplatte, einen auf der Grundplatte befestigten Radialschwingungsoszillator mit einem in Bezug auf den Rotor koaxial angeordneten und in der Art einer Scheibe mit Elektroden ausgeführten Piezoelement enthält, welches perpendikulär zu diesen Elektroden polarisiert ist, sowie wenigstens zwei Stößel besitzt, wobei jeder Stößel mit einem Ende an der zylindrischen Fläche des Piezoelements befestigt ist und mit dem anderen Ende sich an den Rotor stemmt.

Wenn bei einem derartigen piezoelektrischen Motor eine Änderung seiner Rotationsfrequenz notwendig wird, muß der Durchmesser des Piezoelements geändert werden. Dies schließt die Möglichkeit aus, ein universelles Piezoelement für beliebige Rotationsfrequenzen des Rotors des piezoelektrischen Motors zu schaffen. Also ist der Rotationsfrequenzbereich bei  diesem    Piezoelement begrenzt.

Außerdem muß der Stößel mit dickeren Piezoelementen auch immer fester verbunden werden, wobei die Möglichkeit der Verringerung der Leistungsaufnahme, z.B. beim Leerlaufbetrieb eines piezoelektrischen Motors zum Antrieb der Blende von Fotoapparaten, begrenzt wird.

## Offenbarung der Erfindung

Der Erfindung liegt die Aufgabe zugrunde, einen piezoelektrischen Motor zu entwickeln, dessen Aufbau die Möglichkeit gibt, - durch Umwandlung von akustischen Radialschwingungen im Piezoelement in transversale und dann in longitudinale akustische Schwingungen in den Stößeln des piezoelektrischen Radialschwingungsoszillators - die Symmetrieachse jedes Stößels parallel zur Achse des Piezoelements zu verlegen und dadurch den Rotationsfrequenzbereich des

00306530

Rotors für dieses Piezoelement sowie den Bereich der Rotorleistungsaufnahme zu erweitern.

Die Aufgabe der Erfindung wird dadurch gelöst, daß beim piezoelektrischen Motor mit einem Stator und einem Rotor, der durch Friktion mit dem Stator zusammenwirkt, welcher eine Grundplatte, einen auf der Grundplatte befestigten Radialschwingungsoszillator mit einem in Bezug auf den Rotor koaxial angeordneten und in der Art einer Scheibe mit Elektroden ausgeführten Piezoelement enthält, welches perpendikulär zu diesen Elektroden polarisiert ist, sowie wenigstens zwei Stößel besitzt, von denen jeder Stößel mit einem Ende am Piezoelement befestigt ist und mit dem anderen Ende sich an den Rotor stemmt, erfindungsgemäß ein Ende jedes Stößels wenigstens auf einer ebenen Fläche des Piezoelements so befestigt ist, daß zwischen dem Piezoelement und dem Stößel ein Spielraum gebildet ist.

Die Erfindung ermöglicht den Bau einer Reihe von piezoelektrischen Motoren mit einem breiten Leistungsaufnahmebereich.

Außerdem gibt die Erfindung die Möglichkeit, piezoelektrische Motoren mit vereinheitlichten Piezoelementen, mit einem breiten Rotationsfrequenzbereich des Rotors und einem breiten Leistungsaufnahmebereich zu bauen. Es wird auch möglich, die Kosten des piezoelektrischen Motors zu senken und ihn dadurch als Stellantriebe anstelle von Elektromagneten anzuwenden, sowie den Arbeitsaufwand bei der Herstellung des piezoelektrischen Motors herabzusetzen.

Kurzbeschreibung der Zeichnungen

Nachstehend wird die Erfindung an einem konkreten Beispiel ihrer Ausführung und anhand der beigefügten Zeichnungen erläutert. Hierbei zeigen

Fig. 1 einen erfindungsgemäß ausgeführten piezoelektrischen Motor mit zylindrischem Rotor, der die an ihn angedrückten Stößel umfaßt (Längsschnitt);

Fig. 2 den im Schnitt nach der Linie II-II in Fig.1 dargestellten piezoelektrischen Motor gemäß der Erfindung;

Fig. 3a, 3b, 3c ein Piezoelement mit darauf befestigten Stößeln für einen erfindungsgemäß ausgeführten piezoelektrischen Motor mit einem Rotor, der die Stößel umfaßt;

Fig. 3d, 3e, 3g ein Piezoelement mit darauf befestigten Stößeln für einen erfindungsgemäß ausgeführten piezoelektrischen Motor mit einem Rotor, der zwischen den Stößeln angeordnet ist;

Fig. 4 eine schematische Darstellung des piezoelektrischen Motors gemäß der Erfindung mit auf zwei ebenen Flächen des Piezoelements befestigten Stößeln für einen Rotor, der die Stößel umfaßt;

Fig. 5 einen im Längsschnitt dargestellten langsam laufenden piezoelektrischen Motor gemäß der Erfindung für Stellantriebe;

Fig. 6 einen im Längsschnitt gezeigten hochtourigen piezoelektrischen Motor gemäß der Erfindung mit dem Anschluß des Piezoelements über Kontakte;

Fig. 7 einen piezoelektrischen Motor gemäß der Erfindung mit einem Piezoelement in Form einer Scheibe ohne Öffnung (Längsschnitt).

Bevorzugte Ausführungsform der Erfindung

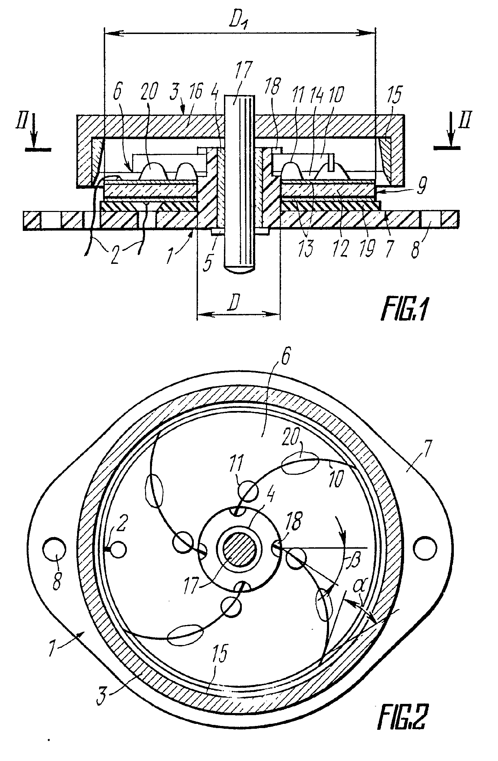

Der piezoelektrische Motor enthält einen Stator 1 (Fig.1) mit Anschlußdrähten 2 zum Anschluß an eine in der Zeichnung nicht gezeigte Wechselspannungsquelle. Der Stator 1 stellt einen unbeweglichen Teil des piezoelektrischen Motors in Bezug auf ein nicht gezeigtes Erzeugnis dar, in dem er eingebaut ist. Der Rotor 3 des piezoelektrischen Motors ist auf dem Stator 1 angeordnet und kann sich in einem Lager 4 drehen, an dem er mit einer lösbaren Verbindung 5, z.B. mit einer Arretierscheibe, gegen die Verschiebung längs seiner Achse abgesichert ist.

Der Stator 1 des piezoelektrischen Motors enthält einen piezoelektrischen Radialschwingungsoszillator 6, der von der Grundplatte 7 des Stators 1 akustisch isoliert und darauf befestigt ist. Die Grundplatte 7 dient zum Schutz des Radialschwingungsoszillators 6 vor Beschädigungen sowie zur Befestigung des piezoelektrischen Motors im Erzeugnis mit Hilfe von Befestigungslöchern 8.

Der piezoelektrische Radialschwingungsoszillator 6 stellt eine elektromechanische Einrichtung dar, die zur Umwandlung der elektrischen Energie in Schwingungsbewegungen von Festkörperteilchen des piezoelektrischen Oszillators 6 überwiegend in der Radialrichtung des Piezoelements 9 bestimmt ist, welches als Rotationskörper ausgeführt ist und den aktiven Teil des piezoelektrischen Radialschwingungsoszillators 6 darstellt.

Im Unterschied zum aktiven Teil des piezoelektrischen Oszillators 6 erfolgt in seinen passiven Teilen keine Energieumwandlung. Zu passiven Teilen des piezoelektrischen Radialschwingungsoszillators 6 gehören Stößel 10 und schalleitende Körper 11, welche die Stößel 10 mit dem Piezoelement 9 verbinden. Beim vorliegenden Radialschwingungsoszillator 6 sind vier Stößel 10 vorgesehen. Zur Verhinderung der einseitigen Kraftbeeinflussung des Stators 1 durch den Rotor 3 soll die minimale Anzahl der Stößel 10 gleich zwei sein. Bei einer Stößelanzahl gleich zwei oder größer als zwei (und bei ihrer gleichmäßiger Verteilung) ist die summarische Krafteinwirkung jedes Stößels 10 auf den Rotor 3 ungefähr gleich Null. Je größer die Zahl der Stößel 10 ist, desto größer ist das Drehmoment des Rotors 3, aber dabei muß gleichzeitig die Speisespannung des piezoelektrischen Motors erhöht werden, was die Anzahl der Stößel 10 ungefähr auf 32 begrenzt. Jeder Stößel 10 ist mit einem Ende wenigstens auf einer ebenen Fläche des Piezoelements 9 befestigt und stemmt sich mit dem anderen Ende gegen den Rotor 3.

Jeder Stößel 10 ist in der Art einer flachen Platte ausgeführt, die aus einem schalleitenden federnden Werkstoff, z.B. aus Stahl oder Pertinax hergestellt wird. Üblicherweise hat jeder Stößel 10 die Form eines Rechtecks. Zulässig sind auch andere Formen der Stößel 10, z.B. mit einer Verjüngung zu ihrem freien (nicht befestigten) Ende hin oder mit Vorsprüngen zur Fixierung des Radialschwingungsoszillators 6 oder zur Befestigung der Stößel 10. Dabei werden die Kennwerte des piezoelektrischen Motors nicht schlechter.

Das Andrücken der Stößel 10 an den Rotor 3 erfolgt infolge der federnden Eigenschaften der Stößel 10 selbst. Dazu werden die Enden der Stößel 10 beim Aufsetzen des Rotors 3 auf den Stator 1 abgebogen. Das Andrücken der Stößel 10 an den Rotor 3 kann man auch durch Einwirkung einer Kraft auf den Rotor 3 in der Axialrichtung erreichen, indem man z.B. das Gewicht des Rotors 3 selbst benutzt oder einen Elektromagneten, eine flache oder gewundene Feder (in Fig. 1 nicht gezeigt) verwendet.

Der schalleitende Körper 11, der die Stößel 10 mit dem Piezoelement 9 verbindet, stellt erstarrtes Lot oder eine harte organische Masse z.B. auf der Basis des polymerisierten Epoxydharzes dar.

Zur Erzeugung von Radialschwingungen im piezoelektrischen Oszillator 6 wird das Piezoelement 9 als Scheibe 12 mit Elektroden 13 auf den ebenen Flächen dieser Scheibe 12 ausgeführt, wobei die Elektroden 13 einen dünnen Metallüberzug darstellen, der durch Metallaufdampfen im Vakuum, durch Einbrennen von Silber oder durch chemisches Fällen von Metall in einer Lösung gebildet wird. Die Spannung der in Fig. 1 nicht gezeigten Speisequelle wird den Elektroden 13 über Anschlußdräte 2 zugeführt, die an die Elektroden 13 nach Fig. 1 angelötet oder mit diesen über Kontakte verbunden sind. Der vom schalleitenden Verbindungskörper 11 nicht bedeckte Teil der Stößel 10 bildet mit der ebenen Fläche des Piezoelements 9 einen Spielraum 14, dessen Größe die Berührung des Stößels 10 mit der Elektrode 13 des Piezoelements 9 beim Zusammenbau des piezoelektrischen Motors verhindern soll. Wenn beispielsweise beim Zusammenbau von zehn piezoelektrischen Motoren der Stößel 10 eines dieser Motoren die Elektrode 13 berührt, muß die Konstruktion des Motors durch Verdoppelung des Spielraumes 14 geändert werden. Die Scheibe 12 wird aus einem polykristallinen Werkstoff mit piezoelektrischen Eigenschaften hergestellt. Zur Erzeugung von piezoelektrischen Eigenschaften im polykristallinen Werkstoff wird darin Restpolarisation erzeugt. Diesen Vorgang nennt man einfach Werkstoffpolarisation. Zur Herstellung des Piezoelements 9

00306530

des piezoelektrischen Motors ist die Benutzung eines Werkstoffes auf der Basis einer festen Blei-Titanat-Zirkonat-Lösung zweckmäßig.

Die Elektroden 13 sind für die Polarisation des Werkstoffes notwendig, an sie wird die Polarisationsspannung angelegt. Dabei fällt die Polarisationsrichtung des Piezoelements 9 mit dem Feldstärkevektor des Polarisationsfeldes zusammen, ist also zur Oberfläche der Elektroden 13 perpendikulär. Um Radialschwingungen mit der Betriebsfrequenz des piezoelektrischen Motors im Piezoelement 9 des piezoelektrischen Radialschwingungsoszillators 6 zu erzeugen, soll der Maximaldurchmesser $D_1$ des Piezoelements 9 oder die Differenz der Durchmesser $D_1 - D$ (D ist Durchmesser der Öffnung in der Scheibe 12) zweckmäßigerweise gleich der halben Wellenlänge $\lambda$ der akustischen Radialschwingungen sein. Dazu benutzt man die Formel

$$\frac{\lambda}{2} \simeq \frac{N}{f} \, , \qquad (1)$$

wobei f die Resonanzfrequenz der Radialschwingungen ist und N die Frequenzkonstante des Werkstoffes des Piezoelements 9 bedeutet, die von der Schallgeschwindigkeit in diesem Werkstoff abhängig ist.

Der Rotor 3 des piezoelektrischen Motors besteht aus drei Teilen. Der erste Teil (Friktionsteil) 15 stellt einen Ring mit zylindrischer oder kegelförmiger Oberfläche dar und wirkt durch Reibung mit den Stößeln 10 zusammen. Der Friktionsteil 15 soll aus verschleißfestem Werkstoff mit minimaler Oberflächenrauhigkeit gefertigt werden, um den Verschleiß der Stößel 10 zu mindern. Für piezoelektrische Motoren, die für eine lange Betriebsdauer bestimmt sind, wird der Friktionsteil 15 aus Mineralkeramik auf der Basis von Aluminiumoxid oder aus härtbaren Kunststoffen, z.B. aus Pertinax hergestellt. Der Friktionsteil 15 ist mit dem zweiten Teil des Rotors 3 des piezoelektrischen Motors - mit einem Becher 16 fest verbunden. Im Becher 16 ist der dritte Teil des Rotors 3 des piezoelektrischen Motors - die Welle 17 eingebaut, die sich im Lager 4 drehen kann und gegen die Verschiebung in der Axialrichtung mittels der die Welle 17 umfassenden lösbaren Verbindung 5 fixiert ist. Für piezoelektrische Motoren, deren lange Betriebsdauer kein Bestimmungsparameter ist, werden alle drei Teile des Rotors 3 oder zwei beliebige Teile einstückig, z.B. aus Stahl hergestellt.

Der Radialschwingungsoszillator 6 wird in Bezug auf die Grundplatte 7 mit Hilfe von Nuten 18 fixiert, in welche die Enden der Stößel 10 eingreifen. Die Anwendung anderer Fixierungsarten für den Radialschwingungsoszillator 6, z.B. mit Hilfe von elastischen Klebmitteln verändert das Wesen der Erfindung nicht, wenn die Bedingung eingehalten wird, daß der piezoelektrische Radialschwingungsoszillator 6 von der Grundplatte 7 akustisch isoliert bleibt. Beim betrachteten piezoelektrischen Motor wird die akustische Isolierung des piezoelektrischen Radialschwingungsoszillators 6 von der Grundplatte 7 durch eine Zwischenlage 19 erreicht, die z.B. aus Gummi gefertigt wird. Zur Verlängerung der Betriebsdauer des piezoelektrischen Motors werden die Stößel 10 mit Dämpfern 20 abgedämpft, die aus Gummi hergestellt werden. Der Dämpfungsstoff für die Dämpfer 20 wird im flüssigen Zustand (vor der Polymerisation) als Tropfen auf die Stößel 10 so aufgetragen, daß die Tropfen die Stößel 10 umfassen und auf der Oberfläche der Elektrode 13 zerfließen, worauf dieser Stoff polymerisiert wird.

In Fig. 2 ist der piezoelektrische Motor im Schnitt nach der Linie II – II von Fig. 1 gezeigt. Der Winkel $\alpha$ (Fig. 2) wird von der Tangente an die Oberfläche des Stössels 10 im Punkt seiner Berührung mit dem Friktionsteil 15 und von der Tangente gebildet, die an die Innenfläche des Friktionsteils 15 durch den Punkt ihrer Berührung mit dem Stößel 10 gezogen wird. Der Winkel $\alpha$ soll kleiner als $90°$ sein und in den Grenzen von $85°$ bis $45°$ liegen. Ist der Winkel $\alpha$ kleiner als $45°$, so sinkt der Wirkungsgrad. Bei einem Winkel $\alpha$ größer als $85°$ wird das Drehmoment des Rotors 3 kleiner, was ebenfalls zur Herabsetzung des Wirkungsgrades führt. Die Rotationsfrequenz $\omega$ und das Drehmoment M des Rotors 3 sind vom Winkel $\alpha$ wie folgt

abhängig:

$$\omega \approx \frac{1}{\cos \alpha} \qquad (2)$$

$$M \approx \cos \alpha \qquad (3)$$

Vom Winkel β, der von der Tangente an die Oberfläche des Stößels 10 im Punkt seiner Befestigung und von der Linie einer Ebene gebildet wird, die das befestigte Ende des Stößels 10 und die Drehachse des Rotors 3 schneidet, werden die Rotationsfrequenz ω und das Drehmoment M des Rotors 3 wenig beeinflußt.

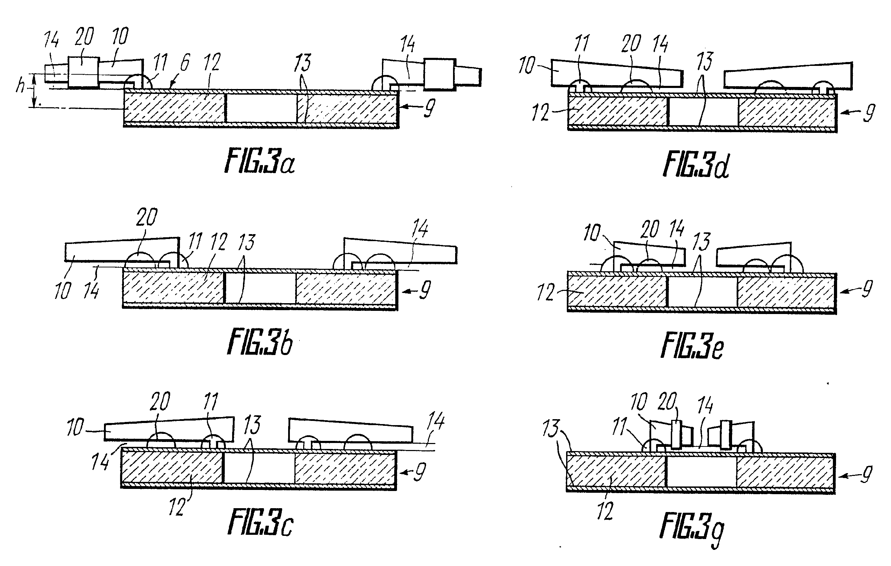

In Fig. 3a, 3b, 3c, 3d, 3e, 3g ist ein Piezoelement mit darauf befestigten Stößeln 10 bei verschiedenen Abständen ihres befestigten Endes vom Mittelpunkt der Scheibe 12 dargestellt. Die Versetzung der Mittellinie des Stößels 10 in Bezug auf die Mittellinie der Scheibe 12 um den Abstand h ermöglicht die Verschiebung des Stößels 10 in der Radialrichtung. Dabei ist die Befestigung der Stößel 10 am Rand der Scheibe 12 nach Fig. 3a, 3d 3c, 3g und im mittleren Teil der Scheibe 12 nach Fig. 3b, 3e möglich. Solche Befestigungsarten sind sowohl für Radialschwingungsoszillatoren 6 langsam laufender piezoelektrischer Motoren mit einem Rotor 3, der die Stößel 10 umfaßt (Fig. 3a, 3b, 3c), als auch für piezoelektrische Radialschwingungsoszillatoren (6) möglich, die für hochtourige piezoelektrische Motoren bestimmt sind, bei denen der Rotor 3 zwischen den Stößeln 10 (Fig. 3d, 3e, 3g) liegt. Bei Verlegung des Befestigungspunktes der Stößel 10 und bei Änderung ihrer Länge kann man den Durchmesser des Rotors 3 ändern und dadurch den für die piezoelektrischen Motoren möglichen Rotationsfrequenzbereich des Rotors 3 bei einer Typengröße des Piezoelements 9 erweitern. Wenn die Stößel 10 dabei über den Rand des Piezoelements 9 beträchtlich herausragen, werden sie mit einem Dämpfer 20 in der Art eines Gummiröhrchens abgedämpft, das auf das Ende des Stößels 10 aufgezogen wird, wie dies z.B. Fig. 3a oder 3g zeigen.

Fig. 4 zeigt einen piezoelektrischen Motor, bei dem die Stößel 10 an beiden ebenen Flächen des Piezoelements 9 befestigt sind. Dies ist einer Verbindung von zwei ähnlichen Radialschwingungsoszillatoren 6 gleichwertig, die in Fig. 4 bedingt mit einer Strichlinie voneinander getrennt sind. Die Befestigung der Stößel 10 auf beiden ebenen Seiten des Piezoelements 9 benutzt man zur Vergrößerung des Volumens des piezoelektrischen Radialschwingungsoszillators 6, wobei die Leistung an der Welle des piezoelektrischen Motors steigt.

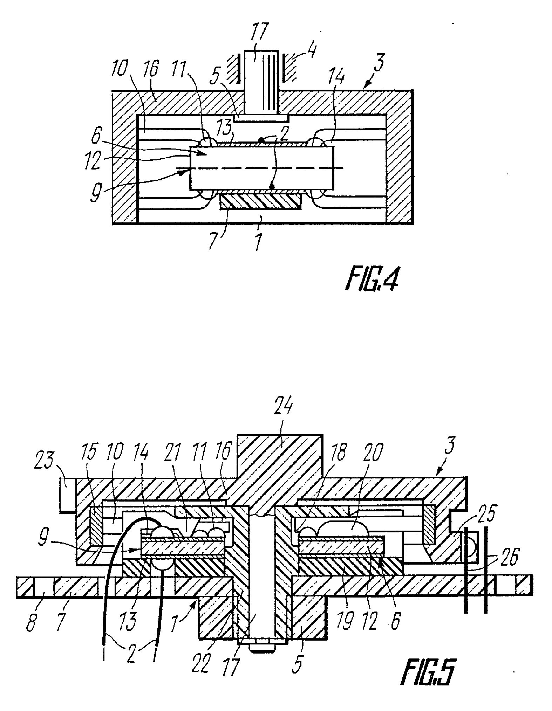

Ein Beispiel der Realisierung eines langsam laufenden piezoelektrischen Motors, der die Funktion eines Elektromagneten erfüllen kann, zeigt Fig. 5. In diesem Motor erfolgt die Fixierung des piezoelektrischen Radialschwingungsoszillators 6 mit Hilfe von Nuten 18 und einer profilierten Zwischenlage 19 mit Vorsprüngen 21, die zwischen den Stößeln 10 liegen. Der lösbare Teil 22 der Grundplatte 7 drückt den Vorsprung 21 an das Piezoelement 9 und fixiert dadurch die Winkellage des piezoelektrischen Radialschwingungsoszillators 6. Die als ein Werkstück gefertigten Becher 16 und Welle 17 sind ebenso wie Einzelteile der Grundplatte 7 aus Kunststoff durch Spritzguß hergestellt. Dabei wird es möglich, am Becher 16 Zähne 23 eines Zahnrades, einen exzentrisch liegenden Nocken zur Umwandlung der Rotation in fortschreitende Bewegung und einen Seitenvorsprung 25 gleichzeitig auszuführen, der mit einem Kontaktpaar 26 zusammenwirkt und mit ihm einen Stellungsgeber des Rotors 3 bildet.

Ein Beispiel der Realisierung eines hochtourigen piezoelektrischen Motors mit einem zwischen den Stößeln 10 liegenden Rotor 3 zeigt Fig. 6. Bei diesem Motor enthält die Grundplatte 7 eine beiderseitig metallkaschierte Hartgewebeplatte 27 und einen aus Metall gefertigten Deckel 28, der über die aus elastischem elektrisch leitendem Werkstoff bestehende Zwischenlage 19 und über die Stößel 10 mit einer Elektrode 13 des Piezoelements 9 elektrisch verbunden ist. Die andere Elektrode 13 ist an die metallkaschierte Fläche der Platte 27 gedrückt und bildet mit ihr eine Kontaktverbindung. Die mit den metallkaschierten Flächen der Platte 27 verbundenen Anschlußdrähte 2 dienen zur Anlegung einer elektrischen Spannung an den piezoelektri-

- 10 - 00306530

schen Motor, wobei eine metallkaschierte Fläche mit dem Deckel 28 durch Lötung elektrisch verbunden ist.

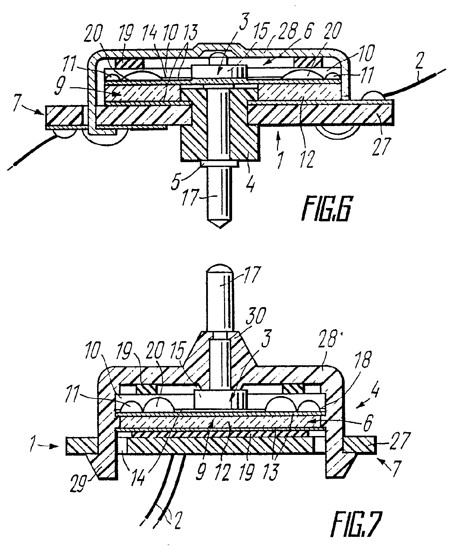

Fig. 7 zeigt einen piezoelektrischen Motor mit einem als Scheibe 12 ohne Öffnung ausgeführten Piezoelement 9. Bei diesem Motor ist der Deckel 28 mit Hilfe von Ansätzen 29 mit der Platte 27 der Grundplatte 7 verbunden. Die im Deckel 28 vorgesehenen Nuten 18 fixieren den piezoelektrischen Radialschwingungsoszillator 6 in der Radialrichtung. In der Axialrichtung ist der piezoelektrische Radialschwingungsoszillator 6 mittels der Zwischenlage 19 fixiert, die einen Gummiring darstellt. Zur Absicherung des Rotors 3 gegen Verschiebungen längs seiner Achse weist die Welle 17 des Rotors 3 eine Ringnut auf, in die ein ringförmiger Ansatz 30 des Deckels 28 eingreift.

Der vorgeschlagene piezoelektrische Motor funktioniert folgenderweise. Eine von einer äußeren Wechselspannungsquelle gelieferte Spannung, deren Frequenz gleich oder nahe einer Resonanzfrequenz von longitudinalen Radialschwingungen des piezoelektrischen Radialschwingungsoszillators 6 (Fig. 1) ist, wird über die Anschlußdrähte 2 den Elektroden 13 des Piezoelements 9 zugeführt und erzeugt im letzteren die longitudinalen Radialschwingungen. Diese Schwingungen werden über den schalleitenden Körper 11 zu den Stößeln 10 übertragen. Die Stößel 10 sind auf der Oberfläche des Piezoelements 9 versetzt angeordnet, und deswegen werden die akustischen Schwingungen zunächst in transversale akustische Schwingungen an der Befestigungsstelle der Stößel 10 auf dem Piezoelement 9 umgewandelt und dann – vom Ende der Stößel 10 reflektiert – werden die transversalen Schwingungen wieder in Longitudinalschwingungen umgesetzt, die sich im Stößel 10 fortpflanzen. Diese longitudinalen Schwingungen sind in Bezug auf die Längsschwingungen im Piezoelement 9 um die Größe h (Fig. 3a) versetzt. Dabei bleibt ein Teil der umgewandelten akustischen Energie in Form der Energie der transversalen Schwingungen, den größeren Teil der Energie bildet aber die Energie der Longitudinalschwingungen. Durch die Wahl der Frequenz der Wechselspannungsquelle nahe der Resonanzfrequenz der longitudinalen Schwingungen beseitigt man den Einfluß der transversalen Schwingungen auf den Betrieb des piezoelektrischen Motors. Da der Winkel $\alpha$ (Fig. 2) kleiner als 90° ist, entsteht in der Zone der Berührung der Stößel 10 mit dem Rotor 3 eine zum Rotor 3 tangential gerichtete Kraft, die seine Drehung im Lager 4 bewirkt. Diese Kraft wird vom Becher 16 zur Welle 17 übertragen. Wenn der piezoelektrische Motor nicht befestigt ist, drehen sich der Stator 1 und der Rotor 3 in entgegengesetzten Richtungen. Damit der Stator 1 nicht gedreht wird, soll die Grundplatte 7 mittels der Öffnungen 8 an einem Erzeugnis befestigt werden. Unerwünschte Kräfte, die im Rotor 3 entstehen können, werden durch Elemente zur Fixierung der Welle 17 in Richtung der Rotorachse, nämlich durch die lösbare Verbindung 5 ausgeglichen. Das infolge der Transversalkräfte entstehende Drehmoment des Rotors 3 ist bestrebt, den piezoelektrischen Radialschwingungsoszillator 6 zu drehen, dies verhindern aber die Nuten 18. In der Berührungszone der Stößel 10 und des Rotors 3 entsteht außer der Tangentialkraft auch eine veränderliche Kraft, die danach strebt, in den Stößeln 10 Biegeschwingungen von subharmonischem Typ, also mit einer Frequenz unter der Speisespannungsfrequenz des piezoelektrischen Motors zu erregen. Der Dämpfer 20 bewirkt eine starke Dämpfung der Biegeschwingungen, da die Nachgiebigkeit der Stößel 10 bei Biegebeanspruchung mit der Elastizität der Dämpfer 20 vergleichbar ist. Ohne die Longitudinalschwingungen in den Stößeln 10 zu stören, verhindern also die Dämpfer 20 die Selbsterregung von subharmonischen Schwingungen, die zur Verkürzung der Betriebsdauer des piezoelektrischen Motors führen und akustische Geräusche verstärken. Wenn der Stößel 10 die Elektrode 13 berührt, ergibt sich ein intermittierender Kontakt des Stößels 10 mit dem Piezoelement 9. Die Längsschwingungen im Stößel 10 werden dabei instabil, es entstehen störende subharmonische Schwingungen, die eine starke Herabsetzung des Wirkungsgrades bewirken. Um dies zu verhindern, werden die Stößel 10 auf der Oberfläche des Piezoelements 9 mit einem Spielraum 14 angeordnet. Die Größe dieses Spielraumes 14 wird so gewählt, daß bei Einwirkung der Stoß- und Vibrationsbeanspruchung sowie der Temperatur kein mechanischer Kontakt zwischen den Stößeln 10 und der Oberfläche des Piezoelements 9 entsteht. Üblicherweise wählt man den Spielraum 14 in den Grenzen von 0,2 mm bis 0,3 mm und vergrößert ihn bei Vergrößerung der Abmessungen des piezoelektrischen Radialschwingungsoszillators 6. Bei der Größe des Spielraumes 14 unter 0,2 mm entsteht ein mechanischer Kontakt zwischen den Stößeln 10 und der Oberfläche des Piezoelements 9 unter dem Einfluß einer externen Vibrationsbeanspruchung des piezoelektrischen Motors. Dies führt zur Verstärkung akustischer Geräusche. Bei einem Spielraum 14 größer als 0,3 mm sinkt der Wirkungsgrad.

Der Mechanismus der Längsschwingungserregung in den Stößeln 10 wird nicht geändert, wenn die Befestigungsstelle der Stößel 10 in Radialrichtung von einem Rand des Piezoelements 9 zum anderen Rand verlegt wird. Wenn dabei der Stößel 10 um 180° von der Befestigungsstelle geschwenkt wird, so ändert sich die Phase der Longitudinalschwingungen. Dies hat aber keinen Einfluß z.B. auf den Wirkungsgrad. Die Arbeitsweise des piezoelektrischen Motors ändert sich nicht, wenn die Stößel 10 an den beiden Seiten des Piezoelements 9 (Fig. 4) angeordnet werden. Die Anordnung der Stößel 10 auf zwei ebenen Flächen des Piezoelements 9 ermöglicht es, das Volumen des Piezoelements 9 zu verdoppeln und dadurch die Leistung des piezoelektrischen Motors zu erhöhen sowie den Bereich seiner Leistungsaufnahme zu erweitern.

Die Befestigung der Stößel 10 auf nur einer ebenen Fläche des Piezoelements 9 gestattet es demgegenüber, den Durchmesser des Rotors 3 in weiten Grenzen ohne Änderung der Abmessungen des Piezoelements 9 zu ändern und dadurch den Rotationsfrequenzbereich des Rotors 3 im piezoelektrischen Motor bei einem vorgegebenen Piezoelement 9 zu erweitern. Dabei ist die Festigkeit der Verbindung der Stößel 10 mit dem Piezoelement 9 von der Dicke des Piezoelements 9 nicht abhängig, und folglich kann die Piezoelementdicke beliebig klein gewählt werden. Infolgedessen können die Speisespannung und die Leistungsaufnahme des piezoelektrischen Motors beträchtlich herabgesetzt werden, wobei der Leistungsaufnahmebereich und folglich das Anwendungsgebiet des piezoelektrischen Motors erweitert werden. Die Anordnung der Stössel 10 mit einem Spielraum 14 in Bezug auf das Piezoelement 9 gewährleistet einen zuverlässigen Betrieb des piezoelektrischen Motors, schliesst akustische Geräusche und eine Verringerung seines Wirkungsgrades aus und erweitert dadurch den Rotationsfrequenzbereich des Rotors 3 und den Leistungsbereich des piezoelektrischen Motors.

Die Ausführung des piezoelektrischen Motors mit außenliegendem Rotor 3 (Fig. 5), der die Stössel 10 umfasst, ergibt bedeutende Drehmomente, die mit Hilfe des exzentrisch liegenden Nockens 24 in längs gerichtete Kräfte umgewandelt werden. Solche Motoren stellen piezoelektrische Momentenmotoren dar. Sie werden mit Endabschaltern in Form eines Seitenvorsprunges 25 versehen, der mit einem Kontaktpaar 26 zusammenwirkt. Man benutzt solche Motoren zum Ersatz von Elektromagneten. Mit Zähnen 23 versehen, können diese piezoelektrischen Motoren als langsamlaufende Drehantriebe benutzt werden.

In Bandtransporteinrichtungen verwendet man schnelllaufende piezoelektrische Motoren. In solchen piezoelektrischen Motoren erfolgt die Stromzuführung über den Deckel 28 (Fig. 6) und die Zwischenlage 19 sowie durch direkte Kontaktgabe zwischen der Elektrode 13 und dem Metallüberzug der Platte 27.

Der piezoelektrische Motor mit einem als Scheibe 12 (Fig. 7) ohne Öffnung ausgeführten Piezoelement 9 kann in Kinderspielzeugen verwendet werden. Seine konstruktive Einfachheit wird durch die Form des Deckels 28 mit Ansätzen 29 erreicht, die den schnellen Zusammenbau des Stators I und des Rotors 3 ermöglichen, und ergibt sich ausserdem infolge der vorhandenen Ringnut und des ringförmigen Ansatzes 30, die den Rotor 3 in der Axialrichtung fixieren.

Die Erfindung gibt also die Möglichkeit, den Rotationsfrequenzbereich des Rotors 3 bei einem vorgegebenen Piezoelement 9 und den Leistungsaufnahmebereich des piezoelektrischen Motors zu erweitern.

- 14 -

00306530

Gewerbliche Anwendbarkeit

Der Erfindungsgegenstand kann als elektrischer untersetzungsloser Motor mit kontinuierlicher oder diskreter (schrittweiser) Rotationsbewegung benutzt werden. Solche Motoren werden in Stellgliedern automatischer Systeme, zum Ersatz von Elektromagneten sowie als Hauptantriebe von Tonband- und Phonogeräten, Film- und Fotogeräten verwendet.

O0306530

## PATENTANSPRUCH

Piezoelektrischer Motor mit einem Stator (1) und einem Rotor (3), der durch Friktion mit dem Stator (1) zusammenwirkt, welcher eine Grundplatte (7), einen auf der Grundplatte (7) befestigten Radialschwingungsoszillator (6) mit einem in Bezug auf den Rotor (3) koaxial angeordneten und in der Art einer Scheibe (12) mit Elektroden ausgeführten Piezoelement (9) enthält, welches perpendikulär zu diesen Elektroden polarisiert ist, sowie wenigstens zwei Stössel (10) besitzt, von denen jeder Stössel mit einem Ende am Piezoelement (9) befestigt ist und mit dem anderen Ende sich an den Rotor (3) stemmt, d a d u r c h g e - k e n n z e i c h n e t, dass ein Ende jedes Stössels (10) wenigstens auf einer ebenen Fläche des Piezoelements (9) so befestigt ist, dass zwischen dem Piezoelement (9) und dem Stössel (10) ein Spielraum (14) bleibt.

FIG.1

FIG.2

FIG.3a

FIG.3d

FIG.3b

FIG.3e

FIG.3c

FIG.3g

*FIG.4*

*FIG.5*

FIG.6

FIG.7

# INTERNATIONAL SEARCH REPORT

00306530

International Application No PCT/SU 87/00027

## I. CLASSIFICATION OF SUBJECT MATTER (if several classification symbols apply, indicate all) 6

According to International Patent Classification (IPC) or to both National Classification and IPC

Int.Cl.4: H 02 N 2/00, H 01 L 41/08

## II. FIELDS SEARCHED

### Minimum Documentation Searched 7

| Classification System | Classification Symbols |
|---|---|
| Int.Cl.4: | H 02 N 2/00, H 01 L 41/08, H 02 N 11/00 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | US, A, 3211931 (GENERAL ELECTRIC COMPANY) 12 October 1965, see claims 1-10, figures 1,3 | 1 |
| A | GB, A, 2120462 (TOSHIIKU SASHIDA) 30 November 1983, see figures 2,8,10 | 1 |
| A | GB, A, 2118374 (KIEVSKY POLITEKHNICHESKY INSTITUT IMENY 50-LETIA VELIKOI OKTYABRSKOI SOTSIALISTICHES-KOI REVOLJUTSII) 26 October 1983, see figures 3,4,16b,28 | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 21 October 1987 (21.10.87) | 18 November 1987 (18.11.87) |
| International Searching Authority | Signature of Authorized Officer |
| ISA/SU | |

Form PCT/ISA/210 (second sheet) (January 1985)

27